# DEMANDE DE BREVET EUROPEEN

(11) **EP 4 717 600 A1**
(43) Date de publication de la demande: **01.04.2026**
(21) Numéro de dépôt: 25202322.1
(22) Date de dépôt: 15.09.2025
(51) Int. Cl.: B64D 27/12, B64D 27/18, B64D 27/40

(54) **ENSEMBLE DE PROPULSION D AÉRONEF COMPRENANT UNE STRUCTURE PORTEUSE INTERCALÉE ENTRE UNE MOTORISATION ET UNE STRUCTURE PRIMAIRE D'UN MÂT**

(30) Priorité: 30.09.2024 FR 2410500
(71) Demandeur: AIRBUS OPERATIONS (S.A.S.), 31060 Toulouse (FR)
(72) Inventeur: PAUTIS, Olivier, 31060 TOULOUSE (FR); CHARTON, Nicolas, 31060 TOULOUSE (FR); VINOT, Julien, 31060 TOULOUSE (FR)
(74) Mandataire: Fantin, Laurent

(57) **Abrégé**

L'invention a pour objet un ensemble de propulsion (30) d'aéronef comprenant :
- une motorisation (32),
- une structure primaire (50) de mât (36),
- une nacelle (34) entourant une partie arrière (B) de la motorisation (32),
- un système d'attache-moteur (54) qui comprend :
o une structure porteuse (58) positionnée entre la motorisation (32) et la nacelle (34),
o un premier système de liaison (60) de type rigide reliant l'extrémité avant (58.1) de la structure porteuse (58) et une partie avant (A) de la motorisation (32),
o un deuxième système de liaison (62) de type rigide reliant la structure porteuse (58) et la structure primaire (50),
o au moins une attache-moteur arrière amortissante (98) intercalée entre la partie arrière (B) de la motorisation (32) et la nacelle (34).

L'invention a également pour objet un aéronef comprenant au moins un tel ensemble de propulsion.

## Description

La présente demande se rapporte à un ensemble de propulsion d'aéronef comprenant une structure porteuse intercalée entre une motorisation et une structure primaire d'un mât ainsi qu'à un aéronef comportant au moins un tel ensemble de propulsion.

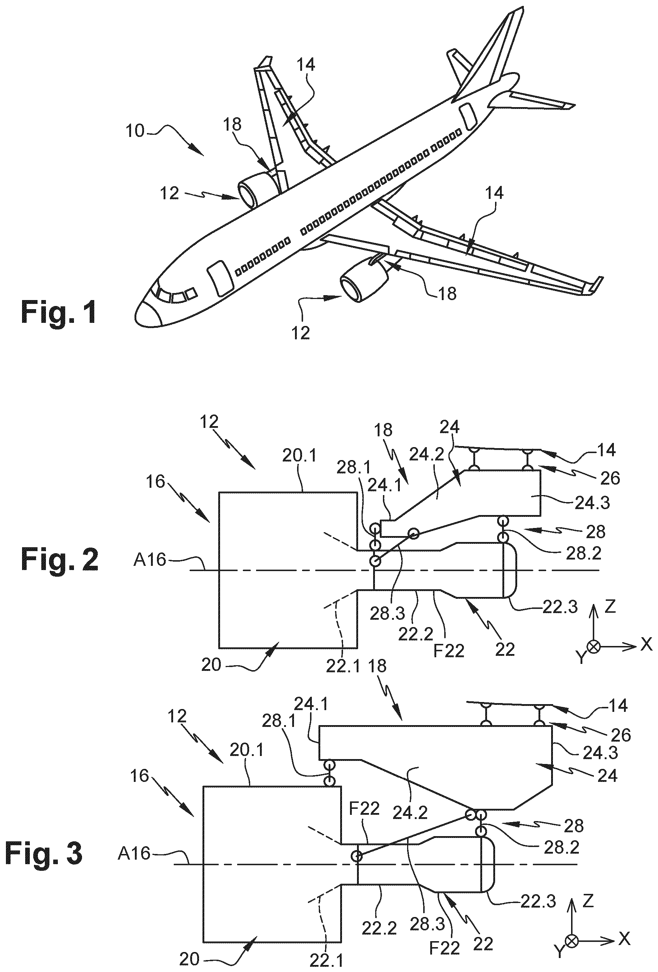

Selon une configuration visible sur les figures 1 à 3, un aéronef 10 comprend plusieurs ensembles de propulsion 12 qui sont positionnés sous la voilure 14 de l'aéronef 10.

Un ensemble de propulsion 12 comprend une motorisation 16, une nacelle (non représentée sur les figures 2 et 3) positionnée autour de la motorisation 16 ainsi qu'un mât 18 reliant la motorisation 16 au reste de l'aéronef 10, notamment à la voilure 14.

Pour la suite de la description, une direction longitudinale X est parallèle à l'axe de rotation A16 de la motorisation 16. Un plan transversal est un plan perpendiculaire à l'axe de rotation A16 de la motorisation 16. Un plan longitudinal est un plan passant par l'axe de rotation A16 de la motorisation 16. Une direction transversale et horizontale Y est une direction perpendiculaire à l'axe de rotation A16 de la motorisation 16 et horizontale. Une direction transversale et verticale Z est une direction perpendiculaire à l'axe de rotation A16 de la motorisation 16 et verticale. Un plan médian vertical PMV est un plan vertical contenant l'axe de rotation A16 de la motorisation 16. Les termes avant et arrière font référence au sens d'écoulement du flux d'air dans la motorisation 16, ce dernier s'écoulant de l'avant vers l'arrière.

La motorisation 16 comprend une soufflante 20 qui comporte un carter de soufflante 20.1 ainsi qu'un cœur de réacteur 22 qui comporte une partie avant 22.1 positionnée à l'intérieur de la soufflante 20, une partie centrale 22.2 ainsi qu'une partie arrière 22.3 intégrant notamment une tuyère. Selon une configuration, la partie centrale 22.2 présente une section transversale inférieure à celles des parties avant et arrière 22.1, 22.3. Le cœur de réacteur 22 présente une enveloppe extérieure appelée carter de motorisation F22.

Le mât 18 comprend une structure primaire 24, sous la forme d'un caisson, qui est reliée à la voilure 14 par un système d'attache-voilure 26 et à la motorisation 16 par un système d'attache-moteur 28. Cette structure primaire 24 comprend une extrémité avant 24.1, une partie médiane 24.2 et une extrémité arrière 24.3.

Selon un premier mode de réalisation visible sur la figure 2, le système d'attache moteur 28 comprend une attache avant 28.1 reliant l'extrémité avant 24.1 de la structure primaire 24 et la partie avant et/ou centrale 22.1, 22.2 du cœur de réacteur 22, une attache arrière 28.2 reliant l'extrémité arrière 24.3 de la structure primaire 24 et la partie arrière 22.3 du cœur de réacteur 22 ainsi que deux bielles 28.3, positionnées de manière symétrique par rapport au plan médian vertical PMV de la motorisation 16, reliant la structure primaire 24 et la partie avant et/ou centrale 22.1, 22.2 du cœur de réacteur 22.

Selon un deuxième mode de réalisation visible sur la figure 3, le système d'attache moteur 28 comprend une attache avant 28.1 reliant l'extrémité avant 24.1 de la structure primaire 24 et le carter de soufflante 20.1 de la soufflante 20, une attache arrière 28.2 reliant l'extrémité arrière 24.3 de la structure primaire 24 et la partie arrière 22.3 du cœur de réacteur 22 ainsi que deux bielles 28.3, positionnées de manière symétrique par rapport au plan médian vertical PMV de la motorisation 16, reliant la structure primaire 24 et la partie avant et/ou centrale 22.1, 22.2 du cœur de réacteur 22.

Dans certains circonstances, ces deux modes de réalisation ne permettent pas un transfert optimal des efforts entre la motorisation 16 et la structure primaire 24 du mât 18.

La présente invention vise à remédier à tout ou partie des inconvénients de l'art antérieur. A cet effet, l'invention a pour objet un ensemble de propulsion d'aéronef comprenant :
- une motorisation qui comprend des parties avant et arrière, la partie arrière étant reliée à la partie avant,
- une structure primaire de mât,
- une nacelle configurée pour entourer au moins la partie arrière de la motorisation,
- un système d'attache-moteur reliant la structure primaire et la motorisation.

Selon l'invention, le système d'attache-moteur comprend :
- une structure porteuse qui s'étend entre une extrémité avant et une extrémité arrière, entourant la partie arrière de la motorisation et positionnée entre la motorisation et la nacelle,
- un premier système de liaison de type rigide, positionné dans un premier plan transversal, reliant l'extrémité avant de la structure porteuse et la partie avant de la motorisation
- un deuxième système de liaison de type rigide reliant la structure porteuse et la structure primaire,
- au moins une attache-moteur arrière amortissante intercalée entre la partie arrière de la motorisation et au moins un élément parmi la nacelle et la structure porteuse, l'attache-moteur arrière amortissante étant positionnée dans un deuxième plan transversal décalé vers l'arrière par rapport au premier plan transversal.

Cette solution permet d'optimiser la transmission des efforts entre la motorisation et la structure primaire du mât.

Selon une autre caractéristique, la structure porteuse est une structure en treillis.

Selon une autre caractéristique, la structure porteuse comprend au moins deux renforts transversaux positionnés dans des plans transversaux ainsi que des renforts de jonction reliant les renforts transversaux de manière à former la structure en treillis, chaque renfort transversal décrivant un arc de cercle positionné dans un plan transversal qui s'étend entre des première et deuxième extrémités reliées chacune à la structure primaire ; le deuxième système de liaison comprenant, pour chaque extrémité, une liaison rigide reliant l'extrémité et la structure primaire.

Selon une autre caractéristique, la structure porteuse comprend plusieurs sections configurées pour occuper un état assemblé ainsi qu'un état désassemblé, les sections de la structure porteuse étant dimensionnées de manière à permettre une insertion de la motorisation à l'intérieur de la structure porteuse à l'état désassemblé.

Selon une autre caractéristique, au moins un des renforts transversaux comprend une première section reliée à la structure primaire, une deuxième section reliée à la structure primaire ainsi qu'une section inférieure reliée aux première et deuxième sections par au moins une liaison démontable et/ou par au moins une articulation.

Selon une autre caractéristique, le premier système de liaison comprend deux attaches avant positionnées à chacune des extrémités de la première section d'un premier renfort transversal situé le plus à l'avant ainsi que deux attaches avant positionnées à chacune des extrémités de la deuxième section du premier renfort transversal.

Selon une autre caractéristique, l'ensemble de propulsion comprend au moins un accessoire supporté par la structure porteuse et relié à cette dernière.

Selon une autre caractéristique, l'attache-moteur arrière amortissante comprend plusieurs premiers plots rapportés sur une surface extérieure de partie arrière de la motorisation et positionnés dans le deuxième plan transversal.

Selon une autre caractéristique, l'attache-moteur arrière amortissante comprend plusieurs deuxièmes plots rapportés sur une surface intérieure de la nacelle et positionnés dans le deuxième plan transversal.

Selon une autre caractéristique, les premiers et deuxièmes plots sont agencés de manière à être plaqués les uns contre les autres.

Selon une autre caractéristique, au moins certains deuxièmes plots sont reliés entre eux par une couronne ou au moins un tronçon de couronne positionné(e) dans le deuxième plan transversal.

Selon une autre caractéristique, la nacelle comprend des premier et deuxième capots configurés chacun pour occuper un état fermé dans lequel le capot est proche de la structure porteuse ainsi qu'un état ouvert dans lequel le capot est écarté de la structure porteuse, les deuxièmes plots étant rapportés sur une surface intérieure des premier et deuxième capots. Selon une autre caractéristique, les plots sont en un matériau déformable de manière élastique.

L'invention a également pour objet un aéronef comprenant au moins un ensemble de propulsion selon l'une des caractéristiques précédentes.

D'autres caractéristiques et avantages ressortiront de la description de l'invention qui va suivre, description donnée à titre d'exemple uniquement, en regard des dessins annexés parmi lesquels :
- la figure 1 est une vue en perspective d'un aéronef,
- la figure 2 est une représentation schématique latérale d'un ensemble de propulsion d'aéronef (sans nacelle) illustrant un premier mode de réalisation de l'art antérieur,
- la figure 3 est une représentation schématique latérale d'un ensemble de propulsion d'aéronef (sans nacelle) illustrant un deuxième mode de réalisation de l'art antérieur,
- la figure 4 est une représentation schématique latérale d'un ensemble de propulsion d'aéronef illustrant un mode de réalisation de l'invention,
- la figure 5 est une représentation schématique latérale d'un ensemble de propulsion d'aéronef illustrant un autre mode de réalisation de l'invention,
- la figure 6 est une représentation schématique latérale de l'ensemble de propulsion d'aéronef visible sur la figure 5 montrant la distribution des charges inertielles appliquées à la motorisation et des chemins d'efforts,
- la figure 7 est une vue en perspective d'un ensemble de propulsion d'aéronef avec des capots ouverts illustrant un mode de réalisation de l'invention,
- la figure 8 est une vue en perspective d'un ensemble de propulsion d'aéronef avec des capots fermés illustrant un mode de réalisation de l'invention,
- la figure 9 est une coupe selon la ligne IX-IX d'une partie de l'ensemble de propulsion d'aéronef visible sur la figure 8,
- la figure 10 est une coupe d'une partie de l'ensemble de propulsion d'aéronef illustrant un détail de la figure 9,
- la figure 11 est une vue en perspective d'une structure porteuse illustrant un mode de réalisation de l'invention,
- la figure 12 est une vue en perspective d'une structure porteuse illustrant un autre mode de réalisation,
- la figure 13 est une représentation schématique de la structure porteuse visible sur la figure 12 à l'état démonté sur la partie (A) et à l'état partiellement assemblé sur la partie (B),
- la figure 14 est une vue arrière d'un ensemble de propulsion comportant une structure porteuse supportant des accessoires (avec des capots ouverts) illustrant un mode de réalisation de l'invention,
- la figure 15 est une vue arrière de l'ensemble de propulsion visible sur la figure 14.

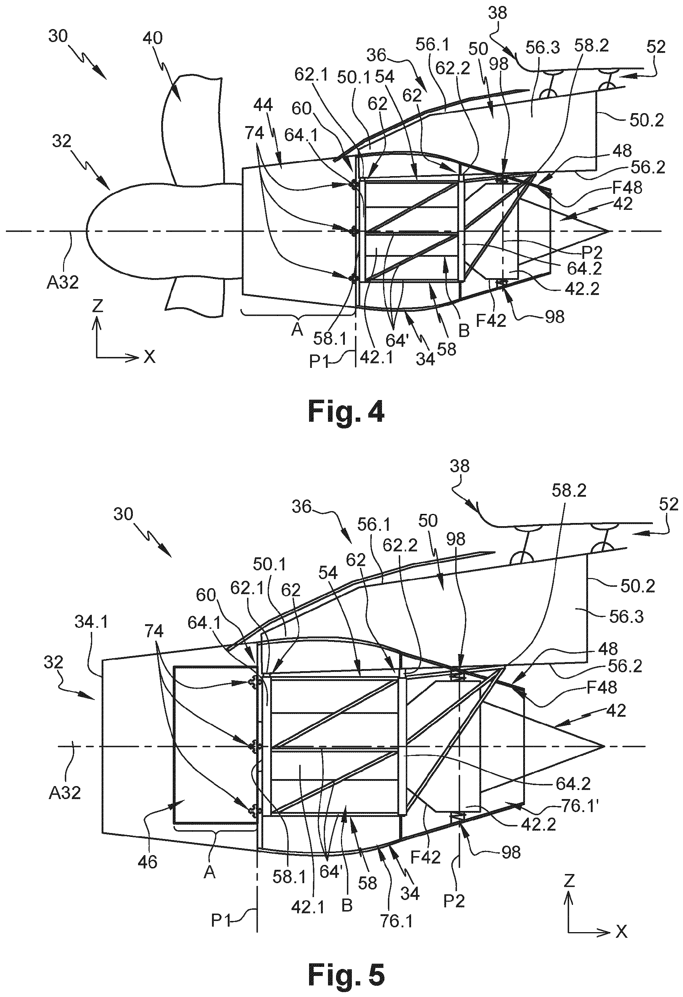

Selon un mode de réalisation visible sur les figures 3 à 15, un ensemble de propulsion 30 comprend une motorisation 32 présentant un axe de rotation A32, une nacelle 34 (visible notamment sur les figures 4 à 6) positionnée autour de la motorisation 32 ainsi qu'un mât 36 configuré pour relier l'ensemble de propulsion 30, et plus particulièrement la motorisation 32, à une structure d'aéronef 38 comme une voilure par exemple. Un aéronef comprend au moins un tel ensemble de propulsion 30.

Selon une configuration visible sur la figure 4, la motorisation 32 est un turbopropulseur. Selon cette configuration, l'ensemble de propulsion 30 comprend, à l'avant de la motorisation 32, une hélice 40 accouplée à la motorisation 32. Cette dernière comprend un cœur de réacteur 42 ainsi qu'un carter avant 44 contenant une boîte de vitesse qui accouple le cœur de réacteur 42 et l'hélice 40. Dans ce cas, la nacelle 34 entoure le cœur de réacteur 42. Elle est approximativement tubulaire et située à l'arrière du carter avant 44, dans le prolongement de ce dernier.

Selon une autre configuration visible sur la figure 5, la motorisation 32 est un turboréacteur qui comprend une soufflante 46 ainsi qu'un cœur de réacteur 42. Dans ce cas, la nacelle 34 entoure la soufflante 46 ainsi que le cœur de réacteur 42. Elle est approximativement tubulaire et présente, à l'avant de la soufflante 46, une entrée d'air 34.1.

Quelle que soit la configuration, la motorisation 32 est configurée pour générer des efforts de poussée et comprend une partie avant A, comme le carter avant 44 dans le cas d'un turbopropulseur ou la soufflante 46 dans le cas d'un turboréacteur par exemple, ainsi qu'une partie arrière B, comme le cœur de réacteur 42 par exemple, reliée à la partie avant A et positionnée à l'arrière de la partie avant A, qui présente une section (dimension prise dans un plan transversal) inférieure à la partie avant A. Les efforts de poussée sont transmis à la structure d'aéronef 38 via la partie avant A.

La partie arrière B de la motorisation 32 intègre notamment des étages tournants de compresseurs et de turbines haute et basse pression ainsi qu'une tuyère. Selon une configuration, le cœur de réacteur 42 présente une surface extérieure F42 appelée carter de motorisation.

La nacelle 34 est configurée pour entourer au moins la partie arrière B de la motorisation 32 et comprend au moins une paroi tubulaire 48 qui présente une surface intérieure F48 orientée vers la partie arrière 42.2 du cœur de réacteur 42.

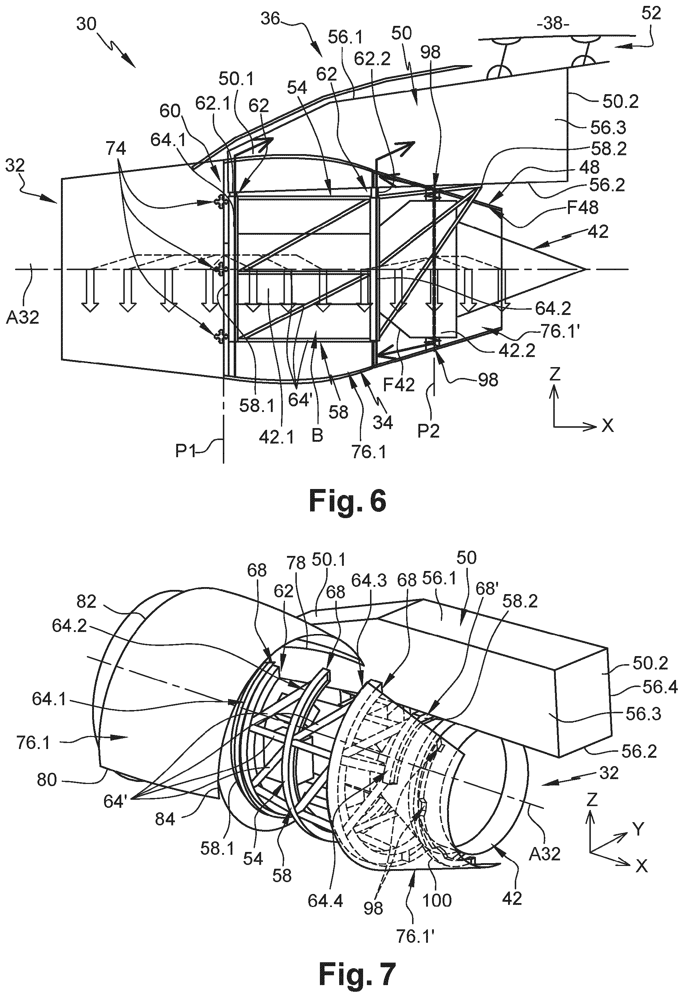

Le mât 36 comprend une structure primaire 50, sous la forme d'un caisson, qui est reliée à la structure aéronef 38 par un système d'attache-voilure 52 et à la motorisation 32 par un système d'attache-moteur 54. Cette structure primaire 50 s'étend d'une extrémité avant 50.1 jusqu'à une extrémité arrière 50.2. Selon un mode de réalisation visible sur la figure 7, la structure primaire 50 comprend un longeron supérieur 56.1, un longeron inférieur 56.2 ainsi que des première et deuxième parois latérales 56.3, 56.4.

Le système d'attache-moteur 54 comprend une structure porteuse 58 qui s'étend entre une extrémité avant 58.1 et une extrémité arrière 58.2, un premier système de liaison 60 reliant l'extrémité avant 58.1 de la structure porteuse 58 et la partie avant A de la motorisation 32 ainsi qu'un deuxième système de liaison 62 reliant la structure porteuse 58 et la structure primaire 50 du mât 36.

Selon un mode de réalisation, la structure porteuse 58 est approximativement tubulaire et positionnée autour de la partie arrière B de la motorisation 32, entre la nacelle 34 et cette partie arrière B.

Selon une configuration, la structure porteuse 58 est une structure ajourée, distincte de la structure primaire 50 du mât et de l'enveloppe extérieure F42 du cœur de réacteur 42. Elle présente un taux d'ouvert (correspondant au ratio de la somme des surfaces ouvertes sur la surface totale) d'au moins 50%. De plus, contrairement à l'enveloppe extérieure F42 du cœur de réacteur 42, elle présente une rigidité suffisante pour former un chemin d'efforts entre la motorisation 32 et la structure primaire 50. Selon un mode de réalisation, cette structure ajourée est une structure en treillis. Cette structure porteuse 58 comprend au moins deux renforts transversaux 64.1, 64.2 positionnés dans des plans transversaux ainsi que des renforts de jonction 64' reliant les renforts transversaux 64.1, 64.2 de manière à former une structure en treillis. Selon un agencement, certains renforts de jonction 64' sont parallèles à la direction longitudinale X alors que d'autres sont obliques et forment un angle avec la direction longitudinale X.

Selon un premier mode de réalisation visible sur les figures 4 et 5, la structure porteuse 58 comprend des premier et deuxième renforts transversaux 64.1, 64.2 sous forme de cadres entourant la partie arrière B de la motorisation 32, le premier renfort transversal 64.1, situé le plus à l'avant, étant relié à la partie avant A de la motorisation 32 par le premier système de liaison 60. Le deuxième système de liaison 62 comprend une première attache 62.1 reliant le premier renfort transversal 64.1 et la structure primaire 50 ainsi qu'une deuxième attache 62.2 reliant le deuxième renfort transversal 64.2 et la structure primaire 50.

Selon un deuxième mode de réalisation visible sur les figures 7, 8, 13 et 14, la structure porteuse 58 comprend quatre renforts transversaux 64.1, 64.2, 64.3, 64.4 décrivant chacun un cercle ou un arc de cercle positionné dans un plan transversal. Selon un agencement, chacun des premier, deuxième et troisième renforts transversaux 64.1, 64.2, 64.3 situés les plus à l'avant décrit un arc de cercle qui s'étend entre des première et deuxième extrémités 66.1, 66.2 reliées chacune à la structure primaire 50, respectivement aux première et deuxième parois latérales 56.3, 56.4 de la structure primaire 50. Le quatrième renfort 64.4 situé le plus à l'arrière décrit un arc de cercle positionné contre le longeron inférieur 56.2 de la structure primaire 50.

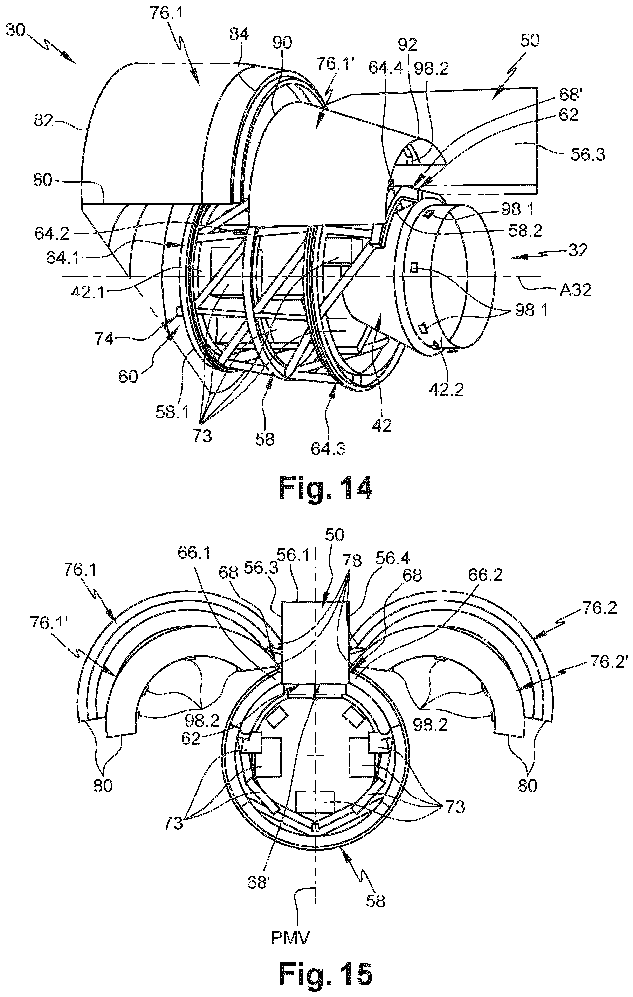

Selon le deuxième mode de réalisation, le deuxième système de liaison 62 comprend, pour chaque extrémité 66.1, 66.2 de chacun des premier, deuxième et troisième renforts transversaux 64.1, 64.2, 64.3, une liaison rigide 68 reliant l'extrémité 66.1, 66.2 et la structure primaire 50. En complément, le système de liaison 62 comprend une liaison rigide 68' (visible sur la figure 14) reliant le quatrième renfort transversal 64.4 et la structure primaire 50. Selon une configuration, chaque liaison rigide 68, 68' est un assemblage permettant de relier deux éléments (un renfort transversal et la structure primaire) par des éléments de liaison comme des boulons par exemple. Bien entendu, l'invention n'est pas limitée à cette solution pour les liaisons rigides 68, 68'.

Selon un agencement, la structure porteuse 58 est approximativement symétrique par rapport au plan médian vertical PMV visible sur la figure 15.

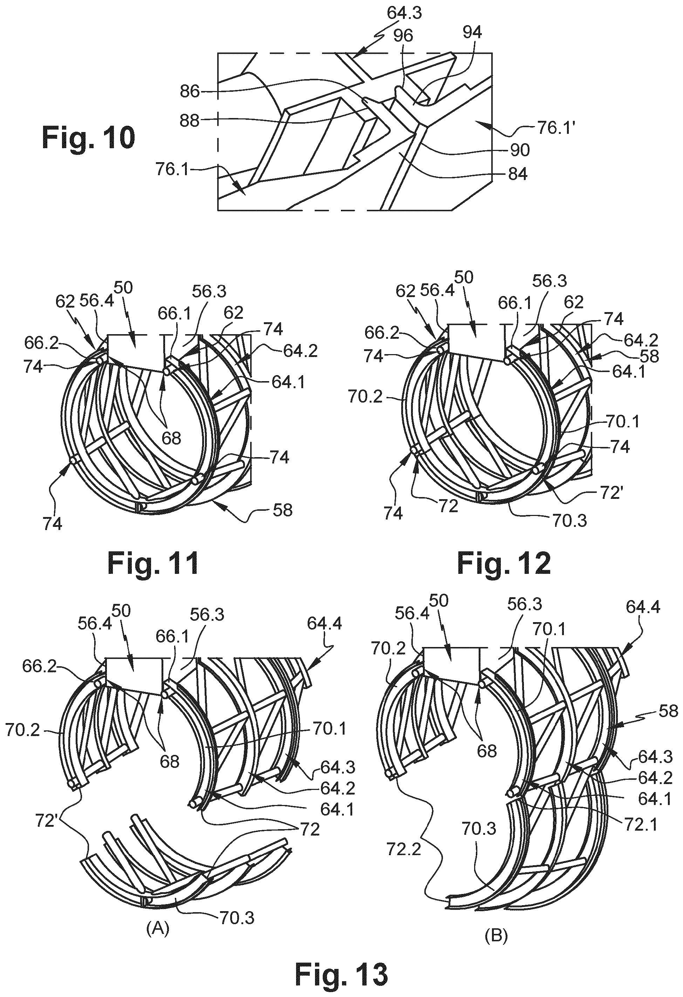

Selon un mode de réalisation visible sur la figure 11, la structure porteuse 58 est réalisée en une seule partie.

Selon un autre mode de réalisation sur les figures 12 et 13, la structure porteuse 58 est réalisée en plusieurs sections configurées pour occuper un état assemblé visible sur la figure 12 ainsi qu'un état désassemblé visible sur la figure 13, les sections de la structure porteuse 58 étant dimensionnées de manière à permettre l'insertion de la motorisation 32 à l'intérieur de la structure porteuse 58 à l'état désassemblé. Comme illustré sur la figure 13, selon une configuration, au moins un des renforts transversaux 64.1, 64.2, 64.3 comprend une première section 70.1 reliée à la première paroi latérale 56.3 de la structure primaire 50, une deuxième section 70.2 reliée à la deuxième paroi latérale 56.4 de la structure primaire 50 ainsi qu'une section inférieure 70.3 reliée aux première et deuxième sections 70.1, 70.2 par au moins une liaison démontable et/ou par au moins une articulation. Selon un agencement visible sur la partie (A) de la figure 13, la section inférieure 70.3 est reliée à la première section 70.1 par une première liaison démontable 72 et à la deuxième section 70.2 par une deuxième liaison démontable 72'. Selon un autre agencement visible sur la partie (B) de la figure 13, la section inférieure 70.3 est reliée à la première section 70.1 par une articulation 72.1 et à la deuxième section 70.2 par une liaison démontable 72.2.

L'ensemble de propulsion 30 comprend au moins un accessoire 73, par exemple un échangeur. Selon une configuration visible sur les figures 14 et 15, au moins un des accessoires 73 de l'ensemble de propulsion 30 est supporté par la structure porteuse 58 et relié à cette dernière. Selon un agencement, au moins un accessoire 73 relié à la structure porteuse 58 est positionné dans une zone située entre la structure porteuse 58 et la motorisation 32, comme illustré sur la figure 15. En variante ou en complément, au moins un accessoire 73 relié à la structure porteuse 58 est positionné dans une zone située entre la structure porteuse 58 et la nacelle 34.

Selon un autre mode de réalisation, le premier système de liaison 60 est positionné dans un premier plan transversal P1 et comprend plusieurs attaches avant 74 reliant la structure porteuse 58 et la partie avant A de la motorisation 32. Le premier système de liaison 60 comprend au moins trois attaches avant 74. Selon un mode de réalisation, le premier système de liaison 60 comprend quatre attaches avant 74, positionnées de manière symétrique par rapport au plan médian vertical PMV, situées au niveau du premier renfort transversal 64.1. Selon un agencement, deux attaches avant 74 sont positionnées à chacune des extrémités de la première section 70.1 du premier renfort transversal 64.1 et deux attaches avant 74 sont positionnées à chacune des extrémités de la deuxième section 70.2.

Chacune des attaches avant 74 est une liaison rigide qui correspond à un assemblage permettant de relier deux éléments (le renfort transversal 64.1 et la partie avant A de la motorisation 32) par des éléments de liaison comme des boulons par exemple. Bien entendu, l'invention n'est pas limitée à cette solution pour les attaches avant 74.

Quel que soit le mode de réalisation, les attaches avant 74 sont positionnées approximativement dans le premier plan transversal P1. Quel que soit le nombre d'attaches avant 74, le premier système de liaison 60 est configuré pour obtenir une liaison isostatique ou hyperstatique entre la partie avant A de la motorisation 32 et la structure porteuse 58 et assurer une reprise des efforts selon la direction longitudinale X, comme les efforts de poussée, et la direction transversale et horizontale Y, comme les charges inertielles de la partie avant A de la motorisation 32.

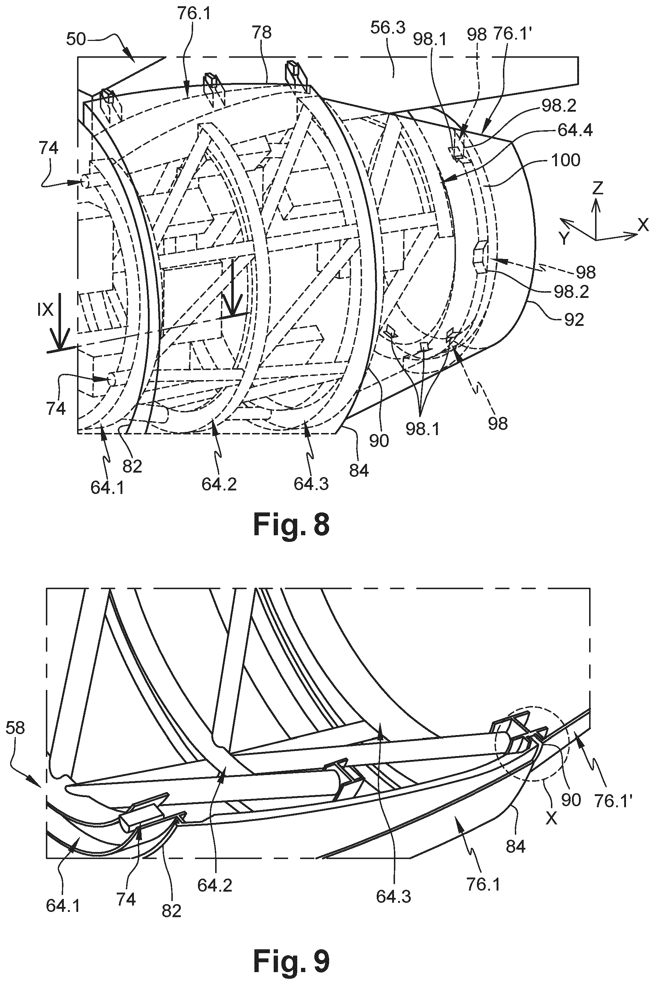

Selon un mode de réalisation, la nacelle 34 comprend au moins un capot configuré pour occuper un état fermé, visible sur la figure 8, dans lequel le capot est proche de la structure porteuse 58 et la nacelle 34 et forme une enveloppe qui entoure la motorisation 32 ainsi qu'un état ouvert, visible sur les figures 14 et 15, dans lequel le capot est écarté de la structure porteuse 58 et autorise un accès à la motorisation 32. Selon une configuration, la nacelle 34 comprend un premier capot avant 76.1, un premier capot arrière 76.1', un deuxième capot avant 76.2 ainsi qu'un deuxième capot arrière 76.2', les premier et deuxième capots avant 76.1, 76.2 étant symétriques par rapport au plan médian vertical PMV, les premier et deuxième capots arrière 76.1', 76.2' étant symétriques par rapport au plan médian vertical PMV.

Chacun des premier et deuxième capots avant, arrière 76.1, 76.1', 76.2, 76.2' s'étend entre un premier bord 78 relié par une articulation à la structure primaire 50 et un deuxième bord 80 libre opposé au premier bord 78. A l'état ouvert, les deuxièmes bords 80 des premier et deuxième capots avant ou arrière 76.1, 76.1', 76.2, 76.2' sont écartés. A l'état fermé, les deuxièmes bords 80 des premier et deuxième capots avant ou arrière 76.1, 76.1', 76.2, 76.2' sont jointifs et maintenus jointifs, à l'état fermé, par un système de verrouillage.

Selon une configuration visible sur les figures 9 et 10, chacun des premier et deuxième capots avant 76.1, 76.2 comprend un bord avant 82 configuré pour coopérer avec le premier renfort transversal 64.1 lorsque le capot est à l'état fermé ainsi qu'un bord arrière 84 configuré pour coopérer avec le troisième renfort transversal 64.3 lorsque le capot est à l'état fermé. Le bord avant 82 présente une collerette qui coopère avec une rainure prévue au niveau du premier renfort transversal 64.1. Le bord arrière 84 présente une collerette 86 qui coopère avec une rainure 88 prévue au niveau du troisième renfort transversal 64.3. Chacun des premier et deuxième capots arrière 76.1', 76.2' comprend un bord avant 90 configuré pour coopérer avec le troisième renfort transversal 64.3 lorsque le capot est à l'état fermé ainsi qu'un bord arrière 92. Comme illustré en détail sur la figure 10, le bord avant 90 présente une collerette 94 qui coopère avec une rainure 96 prévue au niveau du troisième renfort transversal 64.3. Chacun des premier et deuxième capots avant, arrière 76.1, 76.1', 76.2, 76.2' est configuré pour être plaqué contre la structure porteuse 58 à l'état fermé.

Le système d'attache-moteur 54 comprend au moins une attache-moteur arrière amortissante 98 configurée pour assurer une reprise des charges inertielles de la partie arrière B de la motorisation 32. L'attache-moteur arrière amortissante 98 est positionnée dans un deuxième plan transversal P2 décalé vers l'arrière par rapport au premier plan transversal P1, plus particulièrement décalé vers l'arrière par rapport au troisième renfort transversal 64.3. Cette attache-moteur arrière amortissante 98 est configurée pour assurer une reprise des efforts selon les directions transversales horizontale et verticale Y, Z, comme les charges inertielles de la partie arrière B de la motorisation 32 et plus particulièrement de la partie arrière 42.2 du cœur de réacteur 42. Selon un agencement, l'attache-moteur arrière amortissante 98 est intercalée entre la partie arrière 42.2 du cœur de réacteur 42 et au moins un élément parmi la nacelle 34 et la structure porteuse 58. Selon un agencement, l'attache-moteur arrière amortissante 98 est intercalée entre la nacelle 34 et la partie arrière 42.2 du cœur de réacteur 42. L'attache-moteur arrière amortissante 98 peut s'étendre sur une partie de la circonférence ou sur toute la circonférence de la motorisation 32.

Selon une configuration, l'attache-moteur arrière amortissante 98 est solidaire de la nacelle et plus particulièrement des premier et deuxième capots arrière 76.1', 76.2' et/ou de la partie arrière B de la motorisation 32.

Selon un mode de réalisation visible sur la figure 14, l'attache-moteur arrière amortissante 98 comprend plusieurs premiers plots 98.1 rapportés sur la surface extérieure de partie arrière 42.2 du cœur de réacteur 42 et répartis de manière régulière sur au moins une partie de la circonférence du cœur de réacteur 42 dans un même deuxième plan transversal P2. Ainsi, les premiers plots 98.1 peuvent être positionnés sur une partie de la circonférence ou sur toute la circonférence du cœur de réacteur 42.

En complément, l'attache-moteur arrière amortissante 98 comprend plusieurs deuxièmes plots 98.2 rapportés sur la surface intérieure F48 de la nacelle 34, plus particulièrement des premier et deuxième capots arrière 76.1', 76.2', répartis de manière régulière sur au moins une partie de la circonférence de la nacelle 34 dans un même deuxième plan transversal P2. Ainsi, les deuxième plots 98.2 peuvent être positionnés sur une partie de la circonférence ou sur toute la circonférence de la nacelle 34.

Les premiers et deuxièmes plots 98.1, 98.2 sont agencés de manière à être plaqués les uns contre les autres lorsque les premier et deuxième capots arrière 76.1', 76.2' sont à l'état fermé.

Les premiers et/ou deuxièmes plots 98.1, 98.2 sont en un matériau déformable de manière élastique, comme en élastomère par exemple.

Selon une configuration visible sur les figures 7 et 8, au moins certains deuxièmes plots 98.2 sont reliés entre eux par une couronne 100 ou au moins un tronçon de couronne positionné(e) dans le deuxième plan transversal P2.

En variante, l'attache-moteur arrière amortissante 98 comprend des plots rapportés uniquement sur la partie arrière B de la motorisation 32 ou uniquement sur la nacelle 34.

Comme illustré sur la figure 6, la structure porteuse 58, reliant respectivement à la partie avant A de la motorisation 32 et à la structure primaire 50 du mât, ainsi que les premier et deuxième systèmes de liaison 60, 62 de type rigide forment un chemin d'efforts entre la motorisation 32 et la structure primaire 50 du mât, ce chemin d'efforts assurant entre autres le passage des efforts de poussée et aérodynamique de la soufflante et la reprise des charges inertielles de la partie avant A de la motorisation 32. En complément, l'attache-moteur arrière amortissante 98 assure une reprise des efforts des charges inertielles entre la partie arrière B de la motorisation 32 et la structure porteuse 58 et/ou la nacelle 34 et ne participe pas au passage des efforts de poussée et aérodynamique de la soufflante.

Cette configuration permet d'optimiser la transmission des efforts entre la motorisation 32 et la structure primaire 50 du mât.

## Revendications

1. Ensemble de propulsion (30) d'aéronef comprenant :
- une motorisation (32) qui comprend des parties avant et arrière (A, B), la partie arrière (B) étant reliée à la partie avant (A),
- une structure primaire (50) de mât (36),
- une nacelle (34) configurée pour entourer au moins la partie arrière (B) de la motorisation (32),
- un système d'attache-moteur (54) reliant la structure primaire (50) et la motorisation (32) ;
**caractérisé en ce que** le système d'attache-moteur (54) comprend une structure porteuse (58) qui s'étend entre une extrémité avant (58.1) et une extrémité arrière (58.2), un premier système de liaison (60) de type rigide, positionné dans un premier plan transversal (P1), reliant l'extrémité avant (58.1) de la structure porteuse (58) et la partie avant (A) de la motorisation (32) ainsi qu'un deuxième système de liaison (62) de type rigide reliant la structure porteuse (58) et la structure primaire (50), la structure porteuse (58) entourant la partie arrière (B) de la motorisation (32) et étant positionnée entre la motorisation (32) et la nacelle (34), **en ce que** le système d'attache-moteur (54) comprend au moins une attache-moteur arrière amortissante (98) intercalée entre la partie arrière (B) de la motorisation (32) et au moins un élément parmi la nacelle (34) et la structure porteuse (58), l'attache-moteur arrière amortissante (98) étant positionnée dans un deuxième plan transversal (P2) décalé vers l'arrière par rapport au premier plan transversal (P1) et **en ce que** la structure porteuse (58) comprend plusieurs sections configurées pour occuper un état assemblé ainsi qu'un état désassemblé, les sections de la structure porteuse (58) étant dimensionnées de manière à permettre une insertion de la motorisation (32) à l'intérieur de la structure porteuse (58) à l'état désassemblé.

2. Ensemble de propulsion (30) selon la revendication précédente, **caractérisé en ce que** la structure porteuse (58) est une structure en treillis.

3. Ensemble de propulsion (30) selon la revendication précédente, **caractérisé en ce que** la structure porteuse (58) comprend au moins deux renforts transversaux (64.1, 64.2, 64.3, 64.4) positionnés dans des plans transversaux ainsi que des renforts de jonction (64') reliant les renforts transversaux (64.1, 64.2, 64.3, 64.4) de manière à former la structure en treillis, chaque renfort transversal (64.1, 64.2, 64.3, 64.4) décrivant un arc de cercle positionné dans un plan transversal qui s'étend entre des première et deuxième extrémités (66.1, 66.2) reliées chacune à la structure primaire (50), le deuxième système de liaison (62) comprenant, pour chaque extrémité (66.1, 66.2), une liaison rigide (68) reliant l'extrémité (66.1, 66.2) et la structure primaire (50).

4. Ensemble de propulsion (30) selon la revendication 3, **caractérisé en ce qu'**au moins un des renforts transversaux (64.1, 64.2, 64.3) comprend une première section (70.1) reliée à la structure primaire (50), une deuxième section (70.2) reliée à la structure primaire (50) ainsi qu'une section inférieure (70.3) reliée aux première et deuxième sections (70.1, 70.2) par au moins une liaison démontable et/ou par au moins une articulation.

5. Ensemble de propulsion (30) selon la revendication précédente, **caractérisé en ce que** le premier système de liaison (60) comprend deux attaches avant (74) positionnées à chacune des extrémités de la première section (70.1) d'un premier renfort transversal (64.1) situé le plus à l'avant ainsi que deux attaches avant (74) positionnées à chacune des extrémités de la deuxième section (70.2) du premier renfort transversal (64.1).

6. Ensemble de propulsion (30) selon l'une des revendications précédentes, **caractérisé en ce que** l'ensemble de propulsion (30) comprend au moins un accessoire (73) supporté par la structure porteuse (58) et relié à cette dernière.

7. Ensemble de propulsion (30) selon l'une des revendications précédentes, **caractérisé en ce que** l'attache-moteur arrière amortissante (98) comprend plusieurs premiers plots (98.1) rapportés sur une surface extérieure de partie arrière (B) de la motorisation (32) et positionnés dans le deuxième plan transversal (P2).

8. Ensemble de propulsion (30) selon l'une des revendications précédentes, **caractérisé en ce que** l'attache-moteur arrière amortissante (98) comprend plusieurs deuxièmes plots (98.2) rapportés sur une surface intérieure (F48) de la nacelle (34) et positionnés dans le deuxième plan transversal (P2).

9. Ensemble de propulsion (30) selon les revendications 7 et 8, **caractérisé en ce que** les premiers et deuxièmes plots (98.1, 98.2) sont agencés de manière à être plaqués les uns contre les autres.

10. Ensemble de propulsion (30) selon l'une des revendications 8 à 9, **caractérisé en ce qu'**au moins certains deuxièmes plots (98.2) sont reliés entre eux par une couronne (100) ou au moins un tronçon de couronne positionné(e) dans le deuxième plan transversal (P2).

11. Ensemble de propulsion (3) selon l'une des revendications 9 à 10, **caractérisé en ce que** la nacelle (34) comprend des premier et deuxième capots (76.1', 76.2') configurés chacun pour occuper un état fermé dans lequel le capot est proche de la structure porteuse (58) ainsi qu'un état ouvert dans lequel le capot est écarté de la structure porteuse (58), et **en ce que** les deuxièmes plots (98.2) sont rapportés sur une surface intérieure (F48) des premier et deuxième capots (76.1', 76.2').

12. Ensemble de propulsion (30) selon l'une des revendications 8 à 11, **caractérisé en ce que** les plots (98.1, 98.2) sont en un matériau déformable de manière élastique.

13. Aéronef comprenant au moins un ensemble de propulsion (30) selon l'une des revendications précédentes.
